# EUROPEAN PATENT SPECIFICATION

(11) **EP 1 930 357 B1**
(45) Date of publication and mention of the grant of the patent: **13.06.2012**
(21) Application number: 07022587.5
(22) Date of filing: 21.11.2007
(51) Int. Cl.: C08G 18/67, C08G 18/76, C08G 18/78

(54) **Allophanate modified isocyanates which contain reactive unsaturation**
Allophanatmodifizierte Isocyanate mit reaktiver Ungesättigtheit
Isocyanates à base d'allophanate modifié à insaturation réactive

(30) Priority: 04.12.2006 US 633242
(43) Date of publication of application: 11.06.2008
(73) Proprietor: Bayer MaterialScience LLC, Pittsburgh, PA 15205 (US)
(72) Inventor: Adkins, Rick L., Hurricane WV 25526 (US)
(74) Representative: Perchenek, Nils

(56) References cited:
- WO-A-2006/069690
- GB-A- 2 078 231

## Description

This invention relates to novel liquid allophanate-modified diphenylmethane diisocyanate compositions and to a process for the preparation of these novel liquid modified diisocyanate compositions.

Allophanate-modified diphenylmethane diisocyanates and prepolymers thereof are known and described in, for example, U.S. Patents 5,319,053, 5,319,054, 5,440,003, 5,663,272 and 5,686,042. U.S. Patent 5,319,053 discloses a process for preparing stable liquid allophanate-modified MDI isocyanates and prepolymers of these allophanate-modified MDI isocyanates. This process comprises reacting a specific MDI isomer composition with an aliphatic alcohol containing between 1 and 36 carbon atoms to give an allophanate-modified MDI having an NCO group content of 12 to 32.5%.

U.S. Patent 5,319,054 describes a process for producing diallophanate-modified MDI by reacting the diurethane which is the reaction product of one equivalent of a diisocyanate with one equivalent of an aliphatic alcohol or an aromatic alcohol, with 4,4'-MDI containing about 2 to about 60% by weight of the 2,4-isomer of MDI. These diallophanates have NCO group contents of about 12 to about 30%.

EP 641,812 discloses the use of allophanate-modified MDI prepolymers in automotive RIM and rigid foam applications. It is a distinct feature of the invention that the flex modulus of the RIM products can be increased without modifying the chain extender composition or content.

Stable, liquid, diallophanate-modified diphenylmethane diisocyanate is known and described in, for example, U.S. Patent 5,686,042. These diallophanate-modified diisocyanates are prepared from the diurethane of an alcohol and a diisocyanate and MDI. The diallophanate or a prepolymer thereof are disclosed as being used in a RIM process to produce elastomers with improved flex modulus. Since these diallophanates form elastomers with improved flex modulus, lower levels of fast reacting chain extenders are required to reach a given stiffness.

Urethane-free, allophanate-modified diphenylmethane diisocyanates are known and disclosed in, for example, U.S. Patent 5,567,793. This reference also discloses the use of urethane-free, allophanate-modified isocyanates in RIM processes to improve the flex modulus of the resultant elastomers.

U.S. Patent 5,663,272 discloses allophanate-modified MDI prepolymers and their use in RIM processes to improve the flex modulus of the resultant elastomers. These allophanate modified MDI's are made from a monoisocyanate with an organic compound having at least two OH groups to form a urethane, and then converting the urethane to allophanate by reacting with an isomeric mixture of MDI.

Allophanate-modified MDI's, various prepolymers thereof and other modifications thereof, can be used in various end use applications such as, for example, footwear and flexible foams, as is known and described in, for example, U.S. Patents 5,663,272, 5,821,275 5,874,485 and 6,271,279.

Advantages of the present invention provides novel allophanate-modified diphenymethane diisocyanates that are storage-stable liquids at room temperature. These allophanates are more versatile in that they contain reactive unsaturation that allows dual reaction mechanisms, i.e. isocyanate-based and free radical based mechanisms. Such diphenylmethane diisocyanates are suitable for virtually any polyurethane process, such as urethane and/or urea foam, elastomers, thermoplastic urethanes, etc. In addition, they can be used in free radical-type reactions such as those involving radical polymerization of reactive monomers such as styrene, acrylonitrile, methyl methacrylate, etc.

### SUMMARY OF THE INVENTION

This invention relates to a liquid, storage-stable, allophanate-modified diisocyanate having an NCO group content of about 9.5 to about 32.3% by weight. This allophanate-modified diphenylmethane diisocyanate comprises the reaction product of:
(A) diphenylmethane diisocyanate which comprises:
   (1) from 0 to 6% by weight of the 2,2'-isomer,
   (2) from 0 to 76% by weight of the 2,4'-isomer, and
   (3) from 24 to 100% by weight of 4,4'-isomer,
      wherein the sum of the %'s by weight of (1), (2) and (3) totals 100%
      by weight of (A) the diphenylmethane diisocyanate; and
(B) at least one ethylenically unsaturated alcohol compound,
   in the presence of:
(C) at least one radical inhibitor which is free of NCO-reactive groups, selected from the group consisting of 1,4-benzoquinone, phenothiazine and mixtures thereof,
   and
(D) at least one allophanate catalyst, selected from the group consisting of zinc acetylacetonate, stannous octoate, zinc octoate and mixtures thereof.

In addition, the present invention relates to a process for the preparation of an allophanate-modified diphenylmethane diisocyanate. This process comprises (I) reacting (A) diphenylmethane diisocyanate comprising: (1) from 0 to 6% by weight of the 2,2'-isomer, (2) from 0 to 76% by weight of the 2,4'-isomer, and (3) from 24 to 100% by weight of 4,4'-isomer, wherein the sum of the %'s by weight of (1), (2) and (3) totals 100% by weight of (A) the diphenylmethane diisocyanate; and (B) at least one ethylenically unsaturated alcohol compound, in the presence of: (C) at least one radical inhibitor which is free of NCO-reactive groups, and (D) at least one allophanate catalyst, and (II) adding (E) a catalyst stopper, to the reaction mixture in (I) once the allophanate-modified isocyanate has the desired NCO group content.

As used in the present invention, the term liquid means that the allophanate-modified diiphenylmethane disocyanate product does not precipitate solids when stored at 25°C for 3 months.

As used herein, the term "storage-stable" means that the allophanate-modified diphenylmethane diisocyanate product has up to a 1% absolute change in the % NCO group content and up to a 10% change in the viscosity when stored at 25°C for 3 months.

The liquid, storage-stable, allophanate-modified diisocyanates of the present invention are typically characterized by an NCO group content of at least about 9.5% NCO, and preferably of at least about 15% NCO, and more preferably of at least about 19% NCO. These liquid diisocyanates are also typically characaterized by an NCO group content or less than or equal to about 32.3% NCO, preferably less than or equal to about 29% NCO and more preferably less than or equal to about 26% NCO. The liquid modified diisocyanates may also have an NCO group content ranging between any combination of these upper and lower values, inclusive. For example, the liquid diisocyanates may have an NCO group content of from about 9.5% by weight NCO to about 32.3% by weight NCO, preferably from about 15% by weight NCO to about 29% by weight NCO and more preferably from about 19% by weight NCO to about 26% by weight NCO.

In accordance with the present invention, suitable diisocyanates to be used as component (A) in the allophanate-modified diisocyanates of the invention comprise diphenylmethane diisocyanate in which the 2,2'-isomer is present in an amount of from 0 to 6% by weight, preferably 0 to 3% by weight, and more preferably 0 to 1 % by weight; the 2,4'-isomer is present in an amount of 0 to 76% by weight, preferably 0 to 17% by weight, and more preferably 0 to 5% by weight; and the 4,4'-isomer is present in an amount of from 24 to 100% by weight, preferably 80 to 100% by weight, and more preferably 94 to 100% by weight. When mixtures of the 2,2'-isomer, the 2,4'-isomer and the 4,4'-isomer of diphenylmethane diisocyanate are used, the sum of the %'s by weight of the individual isomers totals 100% by weight of the diphenylmethane diisocyanate.

Suitable ethylenically unsaturated alcohols to be used as component (B) in the allophanate-modified diisocyanates of the present invention include, for example, compounds which contain at least one, and preferably only one α,β-ethylenically unsaturated group and one hydroxyl group. Suitable compounds to be used as the ethylenically unsaturated alcohols include those such as, for example, hydroxyalkyl acrylates, hydroxyalkyl methacrylates, hydroxyalkoxy acrylates, hydroxyalkoxy methacrylates, hydroxyaryl acrylates, hydroxyaryl methacrylates, aromatically-substituted ethylenically unsaturated monols, isopropenylphenyl monols. Some specific examples of such compounds for component (B) herein include 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, 2-hydroxypentyl acrylate, 2-hydroxypentyl methacrylate, 2-hydroxyhexyl acrylate, 2-hydroxyhexyl methacrylate, 2-hydroxyoctyl acrylate, 2-hydroxyoctyl methacrylate, diethylene glycol monoacrylate, diethylene glycol monomethacrylate, dipropylene glycol monoacrylate, dipropylene glycol monomethacrylate, 4-hydroxyphenyl acrylate, 4-hydroxyphenyl methacrylate, 2-hydroxyphenyl acrylate, 2-hydroxyphenyl methacrylate, 3-hydroxyphenyl acrylate, 3-hydroxyphenyl methacrylate, cinnamyl alcohol, isopropenylphenol, isopropenylbenzyl alcohol, α,α-dimethyl-m-isopropenylbenzyl alcohols, 4-hydroxycrotononitrile, etc. It is preferred that these ethylenically unsaturated alcohols have a molecular weight (number average) of from about 69 to about 1500. Preferred ethylenically unsaturated alcohols to be used as component (B) herein are 2-hydroxyethyl methacrylate, 2-hydroxylethyl acrylate, 2-hydroxylpropyl methacrylate, and cinnamyl alcohol.

Suitable compounds to be used as component (C), the radical inhibitor, in accordance with the present invention are selected from the group consisting of 1,4-benzoquinone, phenothiazine and mixtures thereof.

Suitable allophanate catalyst to be used as component (D) in accordance with the present invention is selected from the group consisting of zinc acetylacetonate (ZnAcAc), stannous octoate, zinc octoate and mixtures thereof. A preferred catalyst is zinc acetylacetonate (ZnAcAc). In addition, the catalyst is typically present in an amount ranging from 25 to 200 ppm, based on the weight of (A) the isocyanate component.

The allophanate modified diphenylmethane diisocyanates of the present invention are prepared in accordance with known processes and procedures. Such processes include, for example, those described in U.S. Patents 5,319,053, 5,319,054, 5,610,260, and U.S. Published Application 20060084776, the disclosures of which are hereby incorporated by reference.

Suitable catalyst stoppers to be used in the process of the present invention include compounds such as, for example, benzoyl chloride, hydrochloric acid, di(2-ethylhexyl) phosphate, etc. Benzoyl chloride is a preferred stopper. When present, the stopper is typically added in an amount that is equal to about twice the weight of the allophanate catalyst.

The liquid, allophanate-modified isocyanates containing reactive unsaturation are, of course, suitable for the preparation of polyurethanes by known processes as described in the art. These liquid allophanate-modified isocyanates which contain reactive unsaturation also offer the advantages of increased versatility in that they contain reactive unsaturation which allows dual reaction mechanisms i.e. isocyanate-based and free radical based mechanisms. In addition, the liquid, allophanate- modified isocyanates described herein may be used to prepare novel macromers which contain ethylenic unsaturation, and are thus, useful in the preparation of novel preformed stabilizers and in the preparation of novel polymer polyols. These macromers and other related products are not the subject of the present application, but are described in commonly assigned U.S. Application Serial Number 11/633,401 (Agent Docket Number PO-8911/MD-05-083) filed in the United States Patent and Trademark Office on December 04, 2006, i.e. the same day as the present application.

The following examples further illustrate details for the preparation and use of the compositions of this invention. The invention, which is set forth in the foregoing disclosure, is not to be limited either in spirit or scope by these examples. Those skilled in the art will readily understand that known variations of the conditions and processes of the following preparative procedures can be used to prepare these compositions. Unless otherwise noted, all temperatures are degrees Celsius and all parts and percentages are parts by weight and percentages by weight, respectively.

### EXAMPLES

The following components were used in the working examples:
- Isocyanate A:: 4,4-diphenylmethane diisocyanate having an NCO group content of about 33.6%
- HEMA:: 2-hydroxyethyl methacrylate, an ethylenically unsaturated alcohol
- Inhibitor A:: 2,6-tert-butyl-4-methylphenol (commonly referred to as BHT)
- Inhibitor B:: 1,4-benzoquinone
- Catalyst A:: zinc acetylacetonate (ZnAcAc)
- Catalyst Stopper:: benzoyl chloride

### Example 1 (Comparative): This example illustrates importance of proper inhibitors for a stable liquid MDI allophanate

2-Hydroxyethyl methacrylate (HEMA, 28g) was added to a mixture of Isocyanate A (301.7g) and Inhibitor A (0.5g) at 60°C under nitrogen. The solution was allowed to exotherm to 86°C and stirred for 30 minutes. Catalyst A (Zn AcAc, 0.056g) was added to the mixture, followed by heating at 90°C for 1 hour. The solution was cooled to 65°C, and Catalyst Stopper (0.13g) was added to deactivate the catalyst. A light yellow liquid was obtained which had an NCO group content of 27.2%. Upon standing overnight, the resultant product solidified.

### Example 2:

HEMA (20g) was added to a mixture of Isocyanate A (250g) and Inhibitor B (0.08g) at 60°C under nitrogen. The solution was heated at 60 °C for 75 minutes. Catalyst A (0.04g) was added and the reaction solution was heated at 90 °C for 75 minutes. After cooling to 60 °C, Catalyst Stopper (0.08g) was added to yield a yellow liquid product which had an NCO group content of 26%. This product remained liquid for over 15 months, with no visible solids formation.

### Example 3:

HEMA (30g) was added to a mixture of Isocyanate A (250g) and Inhibitor B (0.16g) at 60 °C under nitrogen. The solution was heated at 60°C for 75 minutes. Catalyst A (0.04g) was added and the reaction solution was heated at 90 °C for 75 minutes. After cooling to 60 °C, the Catalyst Stopper (0.08g) was added to yield a storage stable yellow liquid having an NCO group content of 22.6%. This product remained liquid for over 15 months, with no visible solids formation.

### Example 4:

HEMA (80g) was added to a mixture of Isocyanate A (500g) and Inhibitor B (0.4g) at 60 °C under nitrogen. The solution was heated at 60 °C for 75 minutes. Catalyst A (0.08g) was added and the reaction solution was heated at 90 °C for 75 minutes. After cooling to 60°C, the Catalyst Stopper (0.16g) was added to give a storage stable yellow liquid having an NCO group content of 20.0%.

## Claims

1. A liquid, storage-stable, allophanate-modified diisocyanate having an NCO group content of about 9.5 to about 32.3% by weight, and comprising the reaction product of:
(A) diphenylmethane diisocyanate which comprises:
(1) from 0 to 6% by weight of the 2,2'-isomer,
(2) from 0 to 76% by weight of the 2,4'-isomer, and
(3) from 24 to 100% by weight of 4,4'-isomer,
wherein the sum of the %'s by weight of (1), (2) and (3) totals 100% by weight of (A) the diphenylmethane diisocyanate;
and
(B) at least one ethylenically unsaturated alcohol compound, in the presence of:
(C) at least one radical inhibitor which is free of NCO-reactive groups, selected from the group consisting of 1,4-benzoquinone, phenothiazine and mixtures thereof, and
(D) at least one allophanate catalyst selected from the group consisting of zinc acetylacetonate, stannous octoate, zinc octoate and mixtures thereof.

2. The liquid, storage-stable, allophanate-modified diisocyanate of Claim 1, which is **characterized by** an NCO group content of from about 15 to about 29% by weight.

3. The liquid, storage-stable, allophanate-modified diisocyanate of Claim 1, wherein component (A) comprises diphenylmethane diisocyanate which comprises (1) from 0 to 3% by weight of the 2,2'-isomer, (2) from 0 to 17% by weight of the 2,4'-isomer, and (3) from 80 to 100% by weight of 4,4' -isomer, with the sum of the %'s by weight of (1), (2) and (3) totaling 100% by weight of (A) the diphenylmethane diisocyanate.

4. The liquid, storage-stable, allophanate-modified diisocyanate of Claim 1, wherein (B) said ethylenically unsaturated alcohol is selected from the group consisting of hydroxyalkyl acrylates, hydroxylalkyl methacrylates, hydroxylalkoxy acrylates, hydroxylalkoxy methacrylates, hydroxylaryl acrylates, hydroxyaryl methacrylates, aromatic-substituted ethylenically unsaturated monols, isopropenylphenyl monols, 4-hydroxy crotonitrile and mixtures thereof.

5. The liquid, storage-stable, allophanate-modified diisocyanate of Claim 3, wherein component (A) comprises diphenylmethane diisocyanate which comprises (1) from 0 to 1 % by weight of the 2,2'-isomer, (2) from 0 to 5% by weight of the 2,4'-isomer, and (3) from 94 to 100% by weight of 4,4'-isomer, with the sum of the %'s by weight of (1), (2) and (3) totaling 100% by weight of (A) the diphenylmethane diisocyanate.

6. The liquid, storage-stable, allophanate-modified diisocyanate of Claim 1, wherein (B) said ethylenically unsaturated alcohol compound has a molecular weight in the range of from 69 to 1500.

7. A process for the preparation of a liquid, storage-stable, allophanate-modified diisocyanate having an NCO group content of about 9.5% to about 32.3% by weight, comprising:
(I) reacting
(A) diphenylmethane diisocyanate comprising:
(1) from 0 to 6% by weight of the 2,2'-isomer,
(2) from 0 to 76% by weight of the 2,4'-isomer,
and
(3) from 24 to 100% by weight of 4,4'-isomer,
wherein the sum of the %'s by weight of (1), (2) and (3) totals 100% by weight of (A) the diphenylmethane diisocyanate;
and
(B) at least one ethylenically unsaturated alcohol compound, in the presence of:
(C) at least one radical inhibitor which is free of NCO-reactive groups, selected from the group consisting of 1,4-benzoquinone, phenothiazine and mixtures thereof,
and
(D) at least one allophanate catalyst selected from the group consisting of zinc acetylacetonate, stannous octoate, zinc octoate and mixtures thereof.,
and
(II) adding
(E) a catalyst stopper,
to the reaction mixture in (I) once the allophanate-modified isocyanate has the desired NCO group content.

8. The process of Claim 7, wherein the liquid, storage-stable, allophanate-modified diisocyanate has an NCO group content of from about 15 to about 29% by weight.

9. The process of Claim 7, wherein component (A) comprises diphenylmethane diisocyanate which comprises (1) from 0 to 3% by weight of the 2,2'-isomer, (2) from 0 to 17% by weight of the 2,4'-isomer, and (3) from 80 to 100% by weight of 4,4' -isomer, with the sum of the %'s by weight of (1), (2) and (3) totaling 100% by weight of (A) the diphenylmethane diisocyanate.

10. The process of Claim 7, wherein (B) said ethylenically unsaturated alcohol is selected from the group consisting of hydroxyalkyl acrylates, hydroxylalkyl methacrylates, hydroxylalkoxyl acrylates, hydroxylalkoxy methacrylates, hydroxylaryl acrylates, hydroxyaryl methacrylates, aromatic-substituted ethylenically unsaturated monols, isopropenylphenyl monols, 4-hydroxy crotonitrile and mixtures thereof.

11. The process of Claim 7, wherein (E) said stopper comprises an acidic additive.

12. The process of Claim 9, wherein component (A) comprises diphenylmethane diisocyanate which comprises diphenylmethane diisocyanate which comprises (1) from 0 to 1 % by weight of the 2,2'-isomer, (2) from 0 to 5% by weight of the 2,4'-isomer, and (3) from 94 to 100% by weight of 4,4'-isomer, with the sum of the %'s by weight of (1), (2) and (3) totaling 100% by weight of (A) the diphenylmethane diisocyanate.

13. The process of Claim 7, wherein (B) said ethylenically unsaturated alcohol compound has a molecular weight in the range of from 69 to 1500.

## Patentansprüche

1. Flüssiges, lagerstabiles, allophanatmodifiziertes Diisocyanat, das einen NCO-Gruppengehalt von etwa 9,5 bis etwa 32,3 Ges.-% aufweist und das Umsetzungsprodukt von:
(A) Diphenylmethandiisocyanat, das:
(1) 0 bis 6 Gew.-% des 2,2'-Isomers,
(2) 0 bis 76 Gew.-% des 2,4'-Isomers
und
(3) 24 bis 100 Gew.-% des 4,4'-Isomers umfasst, wobei die Summe der Gewichtsprozentanteile von (1), (2) und (3) sich auf 100 Gew.-% von (A) dem Diphenylmethandiisocyanat beläuft;
und
(B) mindestens einer ethylenisch ungesättigten Alkoholverbindung in Gegenwart von:
(C) mindestens einem Radikalinhibitor, der von NCO-reaktiven Gruppen frei ist, ausgewählt aus der Gruppe bestehend aus 1,4-Benzochinon, Phenothiazin und Gemischen davon,
und
(D) mindestens einem Allophanatkatalysator, ausgewählt aus der Gruppe bestehend aus Zinkacetylacetonat, Zinn(II)-octoat, Zinkoctoat und Gemischen davon;
umfasst.

2. Flüssiges, lagerstabiles, allophanatmodifiziertes Diisocyanat nach Anspruch 1, das durch einen NCO-Gruppengehalt von etwa 15 bis etwa 20 Gew.-% **gekennzeichnet** ist.

3. Flüssiges, lagerstabiles, allophanatmodifiziertes Diisocyanat nach Anspruch 1, wobei Komponente (A) Diphenylmethandiisocyanat umfasst, welches (1) 0 bis 3 Gew.-% des 2,2'-Isomers, (2) 0 bis 17 Gew.-% des 2,4'-Isomers und (3) 80 bis 100 Gew.-% des 4,4'-Isomers umfasst, wobei die Summe der Gewichtsprozentanteile von (1), (2) und (3) sich auf 100 Gew.-% von (A) dem Diphenylmethandiisocyanat beläuft.

4. Flüssiges, lagerstabiles, allophanatmodifiziertes Diisocyanat nach Anspruch 1, wobei (B) der ethylenisch ungesättigte Alkohol aus der Gruppe bestehend aus Hydroxyalkylacrylaten, Hydroxyalkylmethacrylaten, Hydroxyalkoxyacrylaten, Hydroxyalkoxymethacrylaten, Hydroxyarylacrylaten, Hydroxyarylmethacrylaten, aromatensubstituierten ethylenisch ungesättigten Monoolen, Isopropenylphenylmonoolen, 4-Hydroxycrotonsäurenitril und Gemischen davon ausgewählt ist.

5. Flüssiges, lagerstabiles, allophanatmodifiziertes Diisocyanat nach Anspruch 3, wobei Komponente (A) Diphenylmethandiisocyanat umfasst, welches (1) 0 bis 1 Gew.-% des 2,2'-Isomers, (2) 0 bis 5 Gew.-% des 2,4'-Isomers und (3) 94 bis 100 Gew.-% des 4,4'-Isomers umfasst, wobei die Summe der Gewichtsprozentanteile von (1), (2) und (3) sich auf 100 Gew.-% von (A) dem Diphenylmethandiisocyanat beläuft.

6. Flüssiges, lagerstabiles, allophanatmodifiziertes Diisocyanat nach Anspruch 1, wobei (B) die ethylenisch ungesättigte Alkoholverbindung ein Molekulargewicht im Bereich von 69 bis 1500 aufweist.

7. Verfahren zur Herstellung eines flüssigen, lagerstabilen, allophanatmodifizierten Diisocyanats, das einen NCO-Gruppengehalt von etwa 9,5 bis etwa 32,3 Gew.-% aufweist, bei dem man:
(I)
(A) Diphenylmethandiisocyanat, das:
(1) 0 bis 6 Gew.-% des 2,2'-Isomers,
(2) 0 bis 76 Gew.-% des 2,4'-Isomers und
(3) 24 bis 100 Gew.-% des 4,4'-Isomers umfasst, wobei die Summe der Gewichtsprozentanteile von (1), (2) und (3) sich auf 100 Gew.-% von (A) dem Diphenylmethandiisocyanat beläuft;
und
(B) mindestens eine ethylenisch ungesättigte Alkoholverbindung in Gegenwart von:
(C) mindestens einem Radikalinhibitor, der von NCO-reaktiven Gruppen frei ist, ausgewählt aus der Gruppe bestehend aus 1,4-Benzochinon, Phenothiazin und Gemischen davon,
und
(D) mindestens einem Allophanatkatalysator, ausgewählt aus der Gruppe bestehend aus Zinkacetylacetonat, Zinn(II)-octoat, Zinkoctoat und Gemischen davon;
umsetzt
und
(II) zu der Reaktionsmischung in (I)
(E) einen Katalysatorstopper gibt, wenn das allophanatmodifizierte Isocyanat den gewünschten NCO-Gruppengehalt aufweist.

8. Verfahren nach Anspruch 7, bei dem das flüssig, lagerstabile, allophanatmodifizierte Diisocyanat einen NCO-Gruppengehalt von etwa 15 bis etwa 29 Gew.-% aufweist.

9. Verfahren nach Anspruch 7, bei dem Komponente (A) Diphenylmethandiisocyanat umfasst, welches (1) 0 bis 3 Gew.-% des 2,2'-Isomers, (2) 0 bis 17 Gew.-% des 2,4'-Isomers und (3) 80 bis 100 Gew.-% des 4,4'-Isomers umfasst, wobei die Summe der Gewichtsprozentanteile von (1), (2) und (3) sich auf 100 Gew.-% von (A) dem Diphenylmethandiisocyanat beläuft.

10. Verfahren nach Anspruch 7, bei dem (B) der ethylenisch ungesättigte Alkohol aus der Gruppe bestehend aus Hydroxyalkylacrylaten, Hydroxyalkylmethacrylaten, Hydroxyalkoxyacrylaten, Hydroxyalkoxymethacrylaten, Hydroxyarylacrylaten, Hydroxyarylmethacrylaten, aromatensubstituierten ethylenisch ungesättigten Monoolen, Isopropenylphenylmonoolen, 4-Hydroxycrotonsäurenitril und Gemischen davon ausgewählt wird.

11. Verfahren nach Anspruch 7, bei dem (E) der Stopper ein saures Additiv umfasst.

12. Verfahren nach Anspruch 9, bei dem Komponente (A) Diphenylmethandiisocyanat umfasst, welches (1) 0 bis 1 Gew.-% des 2,2'-Isomers, (2) 0 bis 5 Gew.-% des 2,4'-Isomers und (3) 94 bis 100 Gew.-% des 4,4'-Isomers umfasst, wobei die Summe der Gewichtsprozentanteile von (1), (2) und (3) sich auf 100 Gew.-% von (A) dem Diphenylmethandiisocyanat beläuft.

13. Verfahren nach Anspruch 7, bei dem (B) die ethylenisch ungesättigte Alkoholverbindung ein Molekulargewicht im Bereich von 69 bis 1500 aufweist.

## Revendications

1. Diisocyanate modifié par un allophanate liquide, stable au stockage, possédant une teneur en groupes NCO d'environ 9,5 à environ 32,3% en poids, et comprenant le produit de réaction :
(A) de diphénylméthane diisocyanate qui comprend :
(1) de 0 à 6% en poids de l'isomère 2,2',
(2) de 0 à 76% en poids de l'isomère 2,4', et
(3) de 24 à 100% en poids de isomère 4,4',
la somme des pourcentages en poids de (1), (2) et (3) étant égale à 100% en poids du diphénylméthane diisocyanate (A) ;
et
(B) d'au moins un composé alcool à insaturation éthylénique, en présente :
(C) d'au moins un inhibiteur de radicaux qui ne contient pas de groupes réactifs avec NCO, choisi dans le groupe constitué par la 1,4-benzoquinone, la phénothiazine et leurs mélanges,
et
(D) d'au moins un catalyseur allophanate choisi dans le groupe constitué par l'acétylacétonate de zinc, l'octoate stanneux, l'octoate de zinc et leurs mélanges.

2. Diisocyanate modifié par un allophanate liquide, stable au stockage, selon la revendication 1, qui est **caractérisé par** une teneur en groupes NCO allant d'environ 15 à environ 29% en poids.

3. Diisocyanate modifié par un allophanate liquide, stable au stockage, selon la revendication 1, dans lequel le constituant (A) comprend un diphénylméthane diisocyanate qui comprend (1) de 0 à 3% en poids de l'isomère 2,2', (2) de 0 à 17% en poids de l'isomère 2,4', et (3) de 80 à 100% en poids de l'isomère 4,4', la somme des pourcentages en poids de (1), (2) et (3) étant égale à 100% en poids du diphénylméthane diisocyanate (A).

4. Diisocyanate modifié par un allophanate liquide, stable au stockage, selon la revendication 1, dans lequel ledit alcool à insaturation éthylénique (B) est choisi dans le groupe constitué par les acrylates d'hydroxyalkyle, les méthacrylates d'hydroxyalkyle, les acrylates d'hydroxyalcoxyle, les méthacrylates d'hydroxyalcoxyle, les acrylates d'hydroxyaryle, les méthacrylates d'hydroxyaryle, les monoalcools à insaturation éthylénique portant un substituant aromatique, les monoalcools isopropénylphényliques, le 4-hydroxycrotonitrile et leurs mélanges.

5. Diisocyanate modifié par un allophanate liquide, stable au stockage, selon la revendication 3, dans lequel le constituant (A) comprend un diphénylméthane diisocyanate qui comprend (1) de 0 à 1% en poids de l'isomère 2,2', (2) de 0 à 5% en poids de l'isomère 2,4' et (3) de 94 à 100% en poids de l'isomère 4,4', la somme des pourcentages en poids de (1), (2) et (3) étant égale à 100% en poids du diphénylméthane diisocyanate (A).

6. Diisocyanate modifié par un allophanate liquide, stable au stockage, selon la revendication 1, dans lequel ledit composé alcool à insaturation éthylénique (B) possède une masse moléculaire dans la fourchette de 69 à 1500.

7. Procédé de préparation d'un diisocyanate modifié par un allophanate liquide, stable au stockage, possédant une teneur en groupes NCO d'environ 9,5% à environ 32,3% en poids, comprenant :
(I) la réaction
(A) d'un diphénylméthane diisocyanate comprenant :
(1) de 0 à 6% en poids de l'isomère 2,2',
(2) de 0 à 76% en poids de l'isomère 2,4', et
(3) de 24 à 100% en poids de l'isomère 4,4', la somme des pourcentages en poids de (1), (2) et (3) étant égale à 100% en poids du diphénylméthane diisocyanate (A) ; et
(B) d'au moins un composé alcool à insaturation éthylénique, en présente :
(C) d'au moins un inhibiteur de radicaux qui ne contient pas de groupes réactifs avec NCO, choisi dans le groupe constitué par la 1,4-benzoquinone, la phénothiazine et leurs mélanges,
et
(D) d'au moins un catalyseur allophanate choisi dans le groupe constitué par l'acétylacétonate de zinc, l'octoate stanneux, l'octoate de zinc et leurs mélanges
et
(II) l'addition
(E) d'un extincteur de catalyseur,
au mélange réactionnel en (I) une fois que l'isocyanate modifié par un allophanate a la teneur en groupes NCO voulue.

8. Procédé selon la revendication 7, dans lequel le diisocyanate modifié par un allophanate liquide, stable au stockage, possède une teneur en groupes NCO allant d'environ 15 à environ 29% en poids.

9. Procédé selon la revendication 7, dans lequel le constituant (A) comprend un diphénylméthane diisocyanate qui comprend (1) de 0 à 3% en poids de l'isomère 2,2', (2) de 0 à 17% en poids de l'isomère 2,4' et (3) de 80 à 100% en poids de l'isomère 4,4', la somme des pourcentages en poids de (1), (2) et (3) étant égale à 100% en poids du diphénylméthane diisocyanate (A).

10. Procédé selon la revendication 7, dans lequel ledit alcool à insaturation éthylénique (B) est choisi dans le groupe constitué par les acrylates d'hydroxyalkyle, les méthacrylates d'hydroxyalkyle, les acrylates d'hydroxyalcoxyle, les méthacrylates d'hydroxyalcoxyle, les acrylates d'hydroxyaryle, les méthacrylates d'hydroxyaryle, les monoalcools à insaturation éthylénique portant un substituant aromatique, les monoalcools isopropénylphényliques, le 4-hydroxycrotonitrile et leurs mélanges.

11. Procédé selon la revendication 7, dans lequel ledit extincteur (E) comprend un additif acide.

12. Procédé selon la revendication 9, dans lequel le constituant (A) comprend un diphénylméthane diisocyanate qui comprend (1) de 0 à 1 % en poids de l'isomère 2,2', (2) de 0 à 5% en poids de l'isomère 2,4' et (3) de 94 à 100% en poids de l'isomère 4,4', la somme des pourcentages en poids de (1), (2) et (3) étant égale à 100% en poids du diphénylméthane diisocyanate (A).

13. Procédé selon la revendication 7, dans lequel ledit composé alcool à insaturation éthylénique (B) possède une masse moléculaire dans la fourchette de 69 à 1500.
